# EUROPÄISCHE PATENTSCHRIFT

(11) **EP 2 271 514 B1**
(45) Veröffentlichungstag und Bekanntmachung des Hinweises auf die Patenterteilung: **27.07.2016**
(21) Anmeldenummer: 09737988.7
(22) Anmeldetag: 08.04.2009
(51) Int. Cl.: B60N 2/07, B60N 2/08, B60N 2/44

(54) **BETÄTIGUNGSEINHEIT EINES KRAFTFAHRZEUGSITZES**
ACTUATING UNIT OF A MOTOR VEHICLE SEAT
UNITÉ D'ACTIONNEMENT D'UN SIÈGE DE VÉHICULE AUTOMOBILE

(30) Priorität: 28.04.2008 DE 102008021123
(43) Veröffentlichungstag der Anmeldung: 12.01.2011
(73) Patentinhaber: Johnson Controls Metals and Mechanisms GmbH & Co. KG, 42699 Solingen (DE)
(72) Erfinder: BECKER, Burckhard, 42657 Solingen (DE); URBAN, Daniel, 40625 Düsseldorf (DE); TEER, Antal, 40822 Mettmann (DE)
(74) Vertreter: Patentanwälte Bauer Vorberg Kayser
(86) Internationale Anmeldenummer: PCT/EP2009/054254
(87) Internationale Veröffentlichungsnummer: WO 2009/132944

(56) Entgegenhaltungen:
- DE-A1- 2 411 414
- FR-A- 2 406 538
- GB-A- 2 119 640

## Beschreibung

Die Erfindung bezieht sich auf eine Betätigungseinheit eines Kraftfahrzeugsitzes nach dem Oberbegriff des Anspruchs 1.

Eine derartige Betätigungseinheit eines Kraftfahrzeugsitzes ist aus der GB 2 119 640 A bekannt.

Bei der Betätigungseinheit nach der US 2,285,616 A ist das Basisteil als ein Träger ausgebildet, der starr mit der Sitzschiene verbunden ist. Das Betätigungselement ist ein Arretierhebel, der ein Arretierelement aufweist, das in eine in der Bodenschiene verbundene Rastenleiste eingreift. Eine Schwenkachse ist parallel zur Längsverstellrichtung der Schienen angeordnet, sie durchgreift Lageröffnungen von Basisteil und Betätigungselement. Schließlich ist eine Feder vorgesehen, die auf die Schwenkachse aufgesteckt ist, sich einerseits am Basisteil und andererseits am Betätigungselement abstützt und das Betätigungselement in eine Ruheposition relativ zum Basisteil elastisch vorbelastet, wobei diese Ruheposition die Eingriffsposition in die Rastenleiste ist. Derartige Betätigungseinheiten haben sich grundsätzlich bewährt, sie werden seit langer Zeit eingesetzt. Dennoch haben sie Nachteile. So ist der Montageaufwand erheblich. Die Schwenkachse lässt sich zwar einfach montieren, sie muss aber durch zusätzliche Mittel gegen axiale Bewegung gesichert werden. Es wird zusätzlicher Platz auf der Schwenkachse für die Aufnahme der Feder benötigt. Die Feder muss separat eingehängt werden, nachdem sie auf die Schwenkachse aufgeschoben ist. Die vorbekannte Betätigungseinheit hat viele einzelne Bauteile.

Hier setzt nun die Erfindung ein. Sie hat es sich zur Aufgabe gemacht, die vorbekannte Betätigungseinheit weiterzuentwickeln, dabei die Lagerhaltung und die Montage zu vereinfachen.

Ausgehend von der Betätigungseinheit der eingangs genannten Art wird diese Aufgabe gelöst durch die Merkmale des Anspruchs 1.

Mit seinem Achsteil bildet dieses Federelement eine Schwenkachse entsprechend der US 2,285,616 A aus. Dieses Achsteil wird auch entsprechend montiert wie die Schwenkachse nach der US 2,285,616 A. Das Achsteil entsprechend der US 2,285,616 A muss nun aber nicht axial durch zusätzliche Mittel, z.B. Stoppelemente, wie sie im Stand der Technik eingesetzt sind, gesichert werden, vielmehr sind dem Achsteil selber keine eigenen Stoppelemente zugeordnet. Das Achsteil wird axial dadurch gesichert, dass mindestens ein restlicher Teilbereich des Federelements an mindestens einer Stelle gehalten wird. Hierzu ist es vorteilhaft, dass eine Halteeinrichtung an dem Basisteil oder am Betätigungselement vorgesehen ist, die den zweiten Endbereich des Federelements fixiert.

Vorzugsweise wirkt das Achsteil des Federelements auch als Abstützung für die elastische Wirkung des Federelements. Dadurch wird ein separates Widerlager, beispielsweise ein Loch für ein Einhängen der Feder nach dem Stand der Technik, überflüssig. Das Federteil der erfindungsgemäßen Betätigungseinheit ist vorzugsweise nicht mehr als Schrauben- oder Schenkelfeder ausgebildet, sondern hat vorzugsweise einen ausreichend langen Federschenkel, der den für die Schwenkbewegung notwendigen Federweg zur Verfügung stellt.

Das Federelement hat ein Auflageteil, das elastisch in Kontakt mit dem Betätigungselement ist. Gegebenenfalls kann es bei der Schwenkbetätigung des Betätigungselements eine Relativbewegung gegenüber dem Betätigungselement durchführen.

Insgesamt ermöglicht es die Erfindung, mit geringem Montageaufwand das komplette Kombinationsbauteil, also das Federelement, zu montieren. Ein Montageaufwand, wie er bei der US 2,285,616 A für das Montieren einer separaten Schwenkachse und ihr axiales Festlegen gegeben ist, entfällt.

Vorzugsweise ist das Federelement aus einem Stabmaterial mit rundem Querschnitt hergestellt. Der Querschnitt ist ausreichend bemessen, damit das Achsteil einen ausreichenden Querschnitt im Lagerbereich aufweist, beispielsweise ist der Durchmesser des Querschnitts größer ein, vorzugsweise als 1,5 mm.

Weitere Vorteile und Merkmale der Erfindung ergeben sich aus den übrigen Ansprüchen sowie der nun folgenden Beschreibung von nicht einschränkend zu verstehenden Ausführungsbeispielen der Erfindung, die im folgenden unter Bezugnahme auf die Zeichnung näher erläutert werden. In dieser Zeichnung zeigen:
- Fig. 1:: eine perspektivische Darstellung einer Längsverstelleinrichtung mit einem Schienenpaar.
- Fig. 2:: ein Schnitt entlang der in Figur 1 mit II-II bezeichneten Schnittebene,
- Fig. 3:: eine perspektivische Darstellung einer Längsverstellung wie Figur 1, jedoch nunmehr mit einer Mehrstiftarretiervorrichtung,
- Fig. 4:: einen Schnitt entlang der Schnittebene IV-IV in Figur 3 in vergrößertem Maßstab,
- Fig. 5:: einen Schnitt entlang der Schnittebene V-V in Figur 3 bzw. in Fig 6 in vergrößertem Maßstab und
- Fig. 6:: eine perspektivische Darstellung einer Längsverstellung wie Figur 3, jedoch nunmehr für eine Einsteckmontage des Achsteils in umgekehrter Längsrichtung, nämlich von rechts.

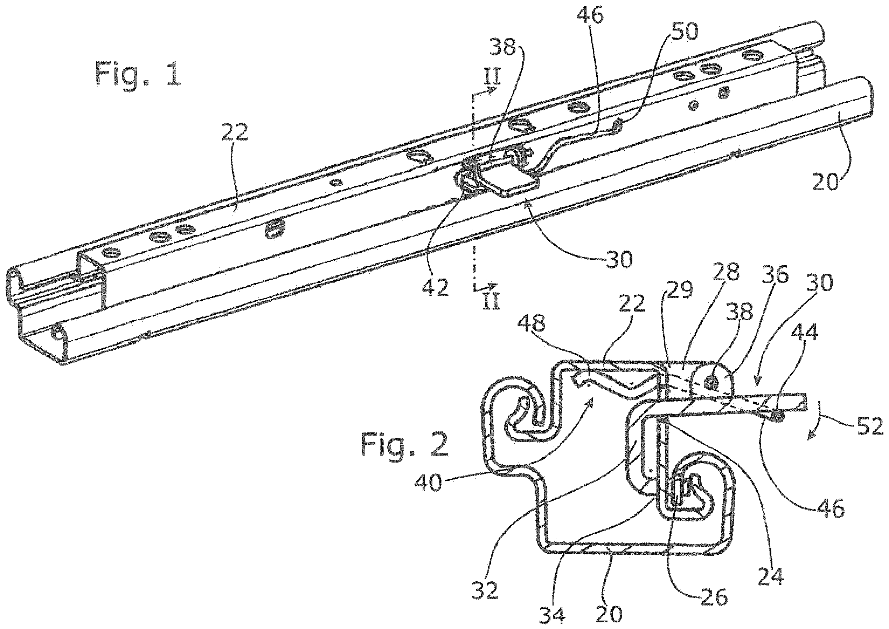

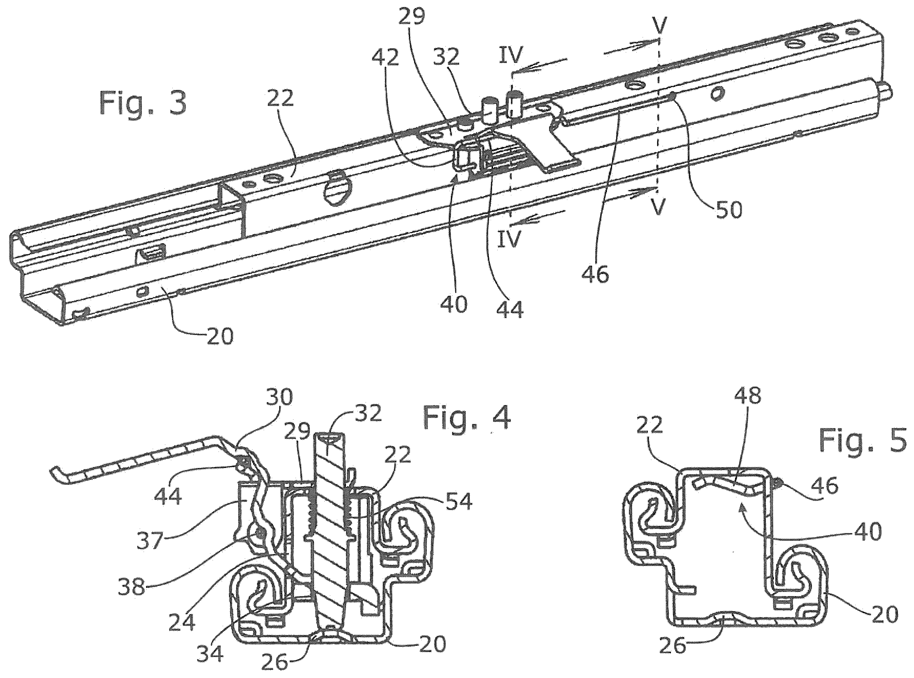

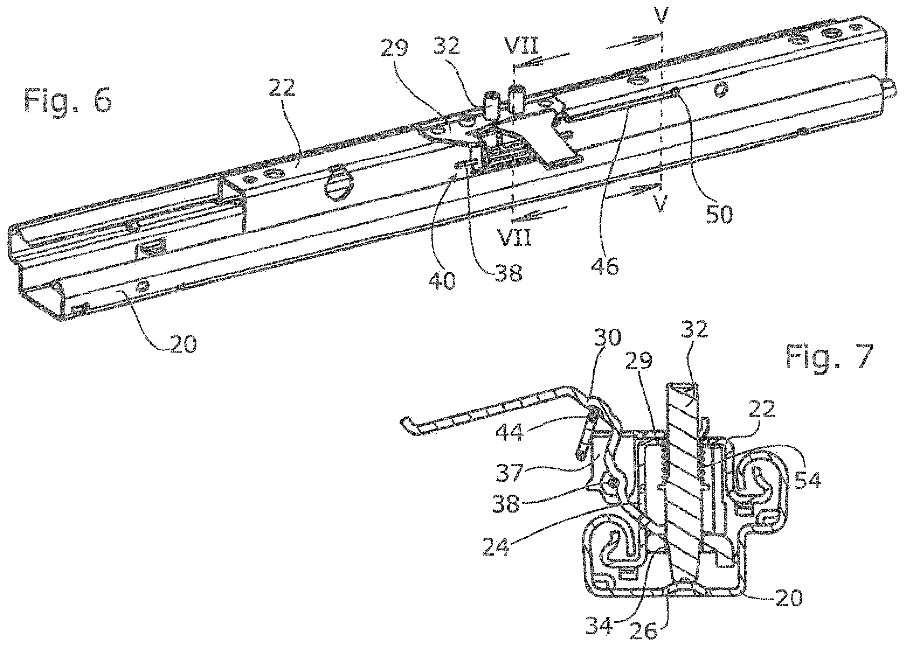

Die erfindungsgemäße Betätigungseinheit nach den drei Ausführungsbeispielen, also Figur 1 und Figur 2 für das erste Ausführungsbeispiel, Figur 3 bis Figur 5 für das zweite Ausführungsbeispiel und Figur 6 und Figur 7 für das dritte Ausführungsbeispiel, ist jeweils für eine Längsverstellvorrichtung mit einem Schienenpaar vorgesehen. Letzteres hat eine Bodenschiene 20 und eine Sitzschiene 22. In der Sitzschiene 22 ist ein Fenster 24 ausgebildet. Die Bodenschiene 20 bildet eine Rastenleiste 26. An der Sitzschiene 22 springen quer zur Längsrichtung der Schiene 20, 22 zwei Lagerböcke 28 vor, sie bilden ein Basisteil 29 aus und haben jeweils eine Lageröffnung.

Im Folgenden wird insbesondere das erste Ausführungsbeispiel beschrieben: Es ist ein Betätigungselement 30 vorgesehen, das durch das Fenster 24 in der Sitzschiene 22 hindurchgesteckt ist. Das Betätigungselement 30 hat einen Sperrarm 32, der durch eine Scheröffnung 34 der Sitzschiene 22 hindurchgreift und mit der Rastenleiste 26 in Eingriff ist. Mit seinem freien Ende ist er in unmittelbarer Nähe eines freien Schenkels der Sitzschiene 22. Er kann mit diesem freien Schenkel in Kontakt sein oder nicht. Das Betätigungselement 30 hat hochgebogene Lagerstücke 36, in denen sich jeweils eine Lageröffnung befindet.

Das Basisteil 29 ist mit der Sitzschiene 22 fest verbunden. Das Basisteil 29 wird von den zwei Lagerböcken 28 ausgebildet, die zwei Lagerböcke 28 sind aus dem Material der Sitzschiene 22 freigeschnitten und herausgebogen, sie haben jeweils eine Lageröffnung.

Die beschriebenen Lageröffnungen des Basisteils 29 und des Betätigungselements 30 fluchten. Durch sie ist ein Achsteil 38 eines Federelements 40 hindurchgesteckt. Das Achsteil 38 bildet einen ersten Endbereich des Federelements 40. Das Federelement 40 weist weiterhin im Anschluss an das Achsteil 38 ein Querstück 42 auf, das quer zur Längsrichtung der Schienen 20, 22 verläuft. Dieses Querstück 42 geht seinerseits über in ein Auflageteil 44. An dieses wiederum schließt sich ein Federbereich 46 an. An den Federbereich 46 schließt sich der zweite Endbereich 48 an, er ist durch ein Loch 50 der Sitzschiene 22 hindurchgesteckt und in dieser festgelegt. Hierdurch wird eine Halteeinrichtung für den zweiten Endbereich 48 gebildet.

Das Betätigungselement 30 ist als zweiarmiger Hebel ausgeführt. Der äußere Hebelarm ist wie im Stand der Technik mit einer Handhabe versehen oder verbunden (nicht dargestellt). An der Unterseite eines äußeren Hebelarms liegt das Auflageteil 44 elastisch an. Wird das Betätigungselement 30 aus der dargestellten Ruheposition und entsprechend dem Pfeil 52 verschwenkt, um die Arretiervorrichtung freizugeben, verformt sich der Federbereich 46, dabei kann es auch zu einer Verschiebung des Auflageteils 44 relativ zum Betätigungselement 30 kommen. Der Federbereich 46 kann geradlinig sein, er kann aber auch mindestens eine Biegung, wie dargestellt, aufweisen. Er wird so ausgebildet, dass die gewünschte elastische Kraft am Betätigungselement 30 vorliegt.

Im Folgenden wird auf das zweite Ausführungsbeispiel eingegangen, insbesondere werden Unterschiede zum ersten Ausführungsbeispiel erläutert. Im zweiten Ausführungsbeispiel ist das Basisteil 29 ein separates, mit der Sitzschiene 22 verbundenes Teil. Wiederum sind Lageröffnungen ausgebildet. Ebenfalls ist ein Betätigungselement 30 vorgesehen, das durch das Fenster 24 der Sitzschiene hindurchgesteckt ist. Es hat nun aber selbst keine Sperrfunktion. Vielmehr sind mehrere Sperrstifte 32 vorgesehen, wie sie aus dem Stand der Technik grundsätzlich bekannt sind, siehe z.B. US 4,189,957. Aus der normalerweise vorliegenden Rastposition mindestens eines der Sperrstifte 32, siehe hierzu Figur 4, werden alle Sperrstifte 32 in eine Freigabeposition gegen die Wirkung einer Eingriffsfeder 54 freigezogen, indem eine am inneren Hebelarm des Betätigungselements 30 vorgesehene Gabelanordnung die Sperrstifte 32 an einem Bund, an dem sich auch die Eingriffsfeder 54 abstützt, untergreift und frei drückt. Die Eingriffsfedern 54 befinden sich innerhalb eines Kanalhohlraums, den die beiden Schienen 20, 22 einschließen. Um die Sperrstifte 32 einschließlich ihrer Eingriffsfedern 54 montieren zu können, sind im oberen Flansch der Sitzschiene 22 ausreichend große Löcher vorgesehen. Nach der Montage der Sperrstifte 32, einschließlich ihrer Eingriffsfedern, wird von oben das Basisteil 29 montiert, es hat Öffnungen für die Sperrstifte 32, die dem Durchmesser der Sperrstifte 32 selbst angepasst sind und kleiner sind als die Löcher der Sitzschiene 22. Dadurch kann sich die Eingriffsfeder 54 an der Unterseite des Basisteils 29 abstützen.

Das Basisteil 29 hat in dem Bereich, in dem es mit dem Achsteil 38 in Kontakt ist, entweder eine Sicke, in die sich das Achsteil 38 einfindet, oder es sind Teilbereiche des Betätigungselements 30 quer zur Richtung der Schwenkachse freigeschnitten und so verformt, dass sie das Achsteil 38 übergreifen können, insgesamt also einen Kanal für das Achsteil 38 ausgebildet ist. Im Unterschied zum ersten Ausführungsbeispiel liegt das Auflageteil 44 in einer Sicke, die am äußeren Hebelarm ausgebildet ist. Dadurch ist seine Position fixiert.

Das dritte Ausführungsbeispiel nach den Figuren 6 und 7 unterscheidet sich in der Montagerichtung beim Einstecken des Achsteils 38 vom zweiten Ausführungsbeispiel. Während diese Montage im zweiten Ausführungsbeispiel von links, also im Sinne der Pfeile für den Schnitt V-V erfolgt, wird im dritten Ausführungsbeispiel das Achsteil 38 von rechts eingesteckt. Um dies zu ermöglichen, ist das Querstück 42 nun auf der anderen Seite des Basisteils 29 zu finden und ist zwischen Querstück 42 und Auflageteil 44 nun zusätzlich ein Teilstück des Federelements 40 vorgesehen, das parallel zum Achsteil 38 bzw. zum Auflageteil 44 verläuft. Das Federelement 40 verläuft nun S-förmig.

## Patentansprüche

1. Betätigungseinheit eines Kraftfahrzeugsitzes mit a) einem Betätigungselement (30), mit b) einem Basisteil (29), mit c) einer Schwenkachse, die zwischen dem Basisteil (29) und dem Betätigungselement (30) angeordnet ist und eine Schwenkbewegung des Betätigungselements (30) relativ zum Basisteil (29) ermöglicht, und mit d) einer Feder, die zwischen Betätigungselement (30) und Basisteil (29) angeordnet ist und das Betätigungselement (30) in eine Ruheposition relativ zum Basisteil (29) elastisch vorbelastet, wobei die Schwenkachse und die Feder einstückig zusammenhängen und zu einem Federelement (40) verbunden sind, das ein Achsteil (38) und einen Federbereich (46) aufweist, das Federelement (40) einen ersten Endbereich aufweist, der geradlinig ist und das Achsteil (38) ausbildet, das Federelement (40) ein Auflageteil (44) aufweist, das Auflageteil (44) lösbar am Betätigungselement (30) anliegt und elastisch gegenüber dem Betätigungselement (30) vorbelastet ist, **dadurch gekennzeichnet, dass** das Betätigungselement (30) als zweiarmiger Hebel ausgeführt ist, dass das Auflageteil (44) an einer Unterseite eines äußeren Hebelarms des zweiarmigen Hebels anliegt, und das Federelement (40) einen zweiten Endbereich aufweist, und dass eine Halteeinrichtung am Basisteil (29) oder am Betätigungselement (30) oder an einem starr mit Basisteil (29) bzw. mit dem Betätigungselement (30) verbundenen Teil vorgesehen ist, die den zweiten Endbereich (48) des Federelements (40) fixiert.

2. Betätigungseinheit nach Anspruch 1, **dadurch gekennzeichnet, dass** das Achsteil (38) bei der Montage in Lageröffnungen eingesteckt ist, die am Basisteil (29) ausgebildet sind, und dass am Betätigungselement (30) entweder ebenfalls Lageröffnungen ausgebildet sind oder ein Anlagebereich für das Achsteil (38) vorgesehen ist, an dem das Achsteil (38) elastisch anliegt.

3. Betätigungseinheit nach Anspruch 1, **dadurch gekennzeichnet, dass**
Achsteil (38) und Auflageteil (44) parallel zueinander verlaufen.

4. Betätigungseinheit nach Anspruch 1 oder 3, **dadurch gekennzeichnet, dass**
das Achsteil (38) und das Auflageteil (44) durch ein Querstück (42) miteinander verbunden sind.

5. Betätigungseinheit nach einem der vorangegangenen Ansprüche, **dadurch gekennzeichnet, dass** das Basisteil (29) ein Teilstück einer Schiene (20 oder 22) einer Längsführung oder ein starr mit dieser Schiene verbundenes Bauteil ist.

6. Betätigungseinheit nach einem der vorangegangenen Ansprüche, **dadurch gekennzeichnet, dass** das Achsteil (38) des Federelements (40) keine axialen Anschläge, wie sie bei Schwenkachsen normalerweise vorgesehen sind, um ihre axiale Position zu sichern, aufweist.

7. Betätigungseinheit nach einem der vorangegangenen Ansprüche, **dadurch gekennzeichnet, dass** die axiale Position des Achsteil (38) durch die Fixierung des zweiten Endbereichs (48) bestimmt ist.

8. Betätigungseinheit nach einem der vorangegangenen Ansprüche, **dadurch gekennzeichnet, dass** die Ruheposition mechanisch durch einen Anschlag (60) oder einen spielfreien Eingriff mindestens eines Sperrzahns (32) definiert ist.

9. Betätigungseinheit nach einem der vorangegangenen Ansprüche, **dadurch gekennzeichnet, dass** das Federelement (40) einen Federbereich (46) aufweist, der sich im Anschluss an den zweiten Endbereich (48) befindet.

## Claims

1. An actuating unit of a motor vehicle seat, comprising a) an actuating element (30), b) a base part (29), c) a pivot axis, which is disposed between the base part (29) and the actuating element (30) and enables a pivoting movement of the actuating element (30) relative to the base part (29), and d) a spring, which is disposed between the actuating element (30) and the base part (29) and elastically biases the actuating element (30) into a rest position relative to the base part (29), wherein the pivot axis and the spring are linked integrally and are connected to form a spring element (40) comprising an axis part (38) and a spring portion (46), the spring element (40) has a first end portion which is rectilinear and forms the axis part (38), the spring element (40) comprises a support part (44), the support part (44) rests detachably against the actuating element (30) and is elastically biased in relation to the actuating element (30), **characterised in that** the actuating element (30) is configured as a two-armed lever, that the support part (44) rests against an underside of an outer lever arm of the two-armed lever, and the spring element (40) comprises a second end portion, and that a retaining means fixing the second end portion (48) of the spring element (40) is provided on the base part (29) or on the actuating element (30) or on a part rigidly connected with the base part (29) or the actuating element (30).

2. The actuating unit according to claim 2, **characterised in that** the axis part (38), during installation, is inserted in bearing openings formed on the base part (29), and that either bearing openings are also formed on the actuating element (30), or a resting area is provided thereon for the axis part (38), against which the axis part (38) rests elastically.

3. The actuating unit according to claim 2, **characterised in that** the axis part (38) and the support part (44) extend parallel to each other.

4. The actuating unit according to claim 1 or 3, **characterised in that** the axis part (38) and the support part (44) are connected to each other by a transverse part (42).

5. The actuating unit according to any one of the preceding claims, **characterised in that** the base part (29) is a section of a rail (20 or 22) of a longitudinal guide or a component that is rigidly connected to this rail.

6. The actuating unit according to any one of the preceding claims, **characterised in that** the axis part (38) of the spring element (40) does not comprise any axial stops as they are normally provided in pivot axes for securing their axial position.

7. The actuating unit according to any one of the preceding claims **characterised in that** the axial position of the axis part (38) is determined by the fixation of the second end portion (48).

8. The actuating unit according to any one of the preceding claims, **characterised in that** the rest position is mechanically defined by a stop (60) or a clearance-free engagement of at least one blocking tooth (32).

9. The actuating unit according to any one of the preceding claims **characterised in that** the spring element (40) comprises a spring portion (46) located adjoining the second end portion (48).

## Revendications

1. Unité de commande d'un siège de véhicule automobile comprenant a) un élément de commande (30), b) une partie de base (29), c) un axe de pivotement qui est disposé entre ladite partie de base (29) et ledit élément de commande (30) et qui permet un mouvement de pivotement de l'élément de commande (30) par rapport à la partie de base (29), et d) un ressort qui est disposé entre ledit élément de commande (30) et ladite partie de base (29) et qui précontraint élastiquement ledit élément de commande (30) dans une position de repos par rapport à ladite partie de base (29), l'axe de pivotement et le ressort étant attachés en une seule pièce l'un à l'autre et étant reliés pour former un élément formant ressort (40) qui présente une partie d'axe (38) et une partie formant ressort (46), ledit élément formant ressort (40) présentant une première zone d'extrémité qui est rectiligne et réalise ladite partie d'axe (38), ledit élément formant ressort (40) présentant une partie d'appui (44), ladite partie d'appui (44) s'appuyant de manière amovible sur l'élément de commande (30) et étant précontrainte élastiquement par rapport à l'élément de commande (30), **caractérisée par le fait que** l'élément de commande (30) est réalisé en tant que levier à deux bras, que ladite partie d'appui (44) s'appuie sur une face inférieure d'un bras de levier extérieur du levier à deux bras, et ledit élément formant ressort (40) présente une deuxième zone d'extrémité, et qu'un dispositif de maintien qui fixe ladite deuxième zone d'extrémité (48) de l'élément formant ressort (40) est prévu sur la partie de base (29) ou sur l'élément de commande (30) ou sur une pièce qui est reliée de manière rigide à la partie de base (29) ou bien à l'élément de commande (30).

2. Unité de commande selon la revendication 1, **caractérisée par le fait que**, lors du montage, ladite partie d'axe (38) est engagée dans des ouvertures de logement qui sont réalisées sur la partie de base (29), et que soit des ouvertures de logement sont réalisées également sur l'élément de commande (30) soit une zone d'appui pour la partie d'axe (38) sur laquelle la partie d'axe (38) s'appuie élastiquement est prévue sur celui-ci.

3. Unité de commande selon la revendication 1, **caractérisée par le fait que** la partie d'axe (38) et la partie d'appui (44) s'étendent parallèlement l'une à l'autre.

4. Unité de commande selon la revendication 1 ou 3, **caractérisée par le fait que** la partie d'axe (38) et la partie d'appui (44) sont reliées l'une à l'autre par une pièce transversale (42).

5. Unité de commande selon l'une quelconque des revendications précédentes, **caractérisée par le fait que** ladite partie de base (29) est un tronçon d'un rail (20 ou 22) d'un guidage longitudinal ou un composant relié de manière rigide à ce rail.

6. Unité de commande selon l'une quelconque des revendications précédentes, **caractérisée par le fait que** la partie d'axe (38) de l'élément formant ressort (40) ne présente pas de butées axiales telles qu'elles sont prévues normalement dans le cas d'axes de pivotement pour sécuriser leur position axiale.

7. Unité de commande selon l'une quelconque des revendications précédentes, **caractérisée par le fait que** la position axiale de la partie d'axe (38) est déterminée par la fixation de la deuxième zone d'extrémité (48).

8. Unité de commande selon l'une quelconque des revendications précédentes, **caractérisée par le fait que** la position de repos est définie mécaniquement par une butée (60) ou par un engrènement sans jeu d'au moins une dent d'arrêt (32).

9. Unité de commande selon l'une quelconque des revendications précédentes, **caractérisée par le fait que** l'élément formant ressort (40) présente une zone formant ressort (46) qui est située à la suite de la deuxième zone d'extrémité (48).
